# EUROPEAN PATENT APPLICATION

(11) **EP 4 811 101 A1**
(43) Date of publication of application: **23.09.2026**
(21) Application number: 25195563.9
(22) Date of filing: 13.08.2025
(51) Int. Cl.: G06F 3/12

(54) **INFORMATION PROCESSING SYSTEM, INFORMATION PROCESSING METHOD, AND PROGRAM**

(30) Priority: 17.03.2025 JP 2025042821
(71) Applicant: Fujifilm Business Innovation Corp., Tokyo 107-0052 (JP)
(72) Inventor: YASUDA, Akiho, Yokohama (JP)
(74) Representative: Meissner Bolte Partnerschaft mbB

(57) **Abstract**

An information processing system includes a processor configured to: acquire plural print jobs including a combination of jobs in which an interruption time during which printing is interrupted occurs due to a change in a printing condition; perform, for each printing condition that causes the interruption time to occur or for each combination of plural printing conditions that cause the interruption time to occur, grouping of the acquired plural print jobs; and output a combination of jobs in each group so that the print jobs are executed by printers.

## Description

### Background

### (i) Technical Field

The present disclosure relates to an information processing system, an information processing method, and a program.

### (ii) Related Art

In Japanese Unexamined Patent Application Publication No. 2021-039445, a technique for suitably reducing the number of times confirmation processing for confirming whether or not print processing that satisfies a quality requirement has been performed is performed and reducing processing load of the confirmation processing is described.

### Summary

In the case where printing is performed using a plurality of printers, a printing schedule has been determined based on performance of each of the printers. Thus, the printing schedule has been designed by allocating print jobs in association with processing capacities of the printers.

However, at the time when printing is actually performed, an interruption time during which printing is interrupted may occur due to a change in printing conditions. Since occurrence of such an interruption time is not taken into account in a known scheduling method, there has been a problem that a difference occurs between the printing schedule and the actual printing time and the operating rate of the printers may deteriorate compared to the assumption in the printing schedule.

Accordingly, it is an object of the present disclosure to reduce a discrepancy between a printing schedule and an actual printing time, compared to a case where grouping of a plurality of print jobs is performed without taking into account occurrence of an interruption time.

According to a first aspect of the present disclosure, there is provided an information processing system including a processor configured to: acquire a plurality of print jobs including a combination of jobs in which an interruption time during which printing is interrupted occurs due to a change in a printing condition; perform, for each printing condition that causes the interruption time to occur or for each combination of a plurality of printing conditions that cause the interruption time to occur, grouping of the acquired plurality of print jobs; and output a combination of jobs in each group so that the print jobs are executed by printers.

According to a second aspect of the present disclosure, in the information processing system according to the first aspect, the processor may be configured to: acquire a priority level setting that is set, based on a printing performance of each of the printers, in such a manner that a higher degree of priority is set for a longer interruption time based on a printing condition; and perform, based on the priority level settings for the individual printers, grouping of the acquired plurality of print jobs.

According to a third aspect of the present disclosure, in the information processing system according to the second aspect, the processor may be configured to, in a case where printing is performed using a plurality of printers with similar printing performances, distribute, based on a priority level setting that is common among the plurality of printers, print jobs including a printing condition that causes the interruption time to occur to the plurality of printers.

According to a fourth aspect of the present disclosure, in the information processing system according to the second or third aspect, the processor may be configured to, in a case where printing is performed using a plurality of printers with different printing performances, distribute, based on a priority level setting for a printer with a low printing performance, print jobs including a printing condition that causes the interruption time to occur in the printer with the low printing performance to the printer with the low printing performance and a different printer.

According to a fifth aspect of the present disclosure, in the information processing system according to the fourth aspect, the processor may be configured to distribute the print jobs including the printing condition for the printer with the low printing performance to the printer with the low printing performance and the different printer and then distribute, based on a priority level setting for the different printer, remaining print jobs to the printer with the low printing performance and the different printer.

According to a sixth aspect of the present disclosure, in the information processing system according to any one of the first to fifth aspects, the processor may be configured to perform, based on a predetermined property of a job, grouping of the acquired plurality of print jobs.

According to a seventh aspect of the present disclosure, in the information processing system according to the sixth aspect, the processor may be configured to rearrange an execution order of the grouped print jobs in ascending order of a length of the interruption time.

According to an eighth aspect of the present disclosure, there is provided a program causing a computer to execute a process for information processing, the process including: acquiring a plurality of print jobs including a combination of jobs in which an interruption time during which printing is interrupted occurs due to a change in a printing condition; performing, for each printing condition that causes the interruption time to occur or for each combination of a plurality of printing conditions that cause the interruption time to occur, grouping of the acquired plurality of print jobs; and outputting a combination of jobs in each group so that the print jobs are executed by printers.

According to a ninth aspect, there is provided an information processing method, comprising: acquiring a plurality of print jobs including a combination of jobs in which an interruption time during which printing is interrupted occurs due to a change in a printing condition; performing, for each printing condition that causes the interruption time to occur or for each combination of a plurality of printing conditions that cause the interruption time to occur, grouping of the acquired plurality of print jobs; and outputting a combination of jobs in each group so that the print jobs are executed by printers.

According to the first, eighth, and ninth aspects of the present disclosure, compared to a case where grouping of a plurality of print jobs is performed without taking into account occurrence an interruption time, a discrepancy between a printing schedule and an actual printing time can be reduced.

According to the second aspect of the present disclosure, grouping based on characteristics of printers can be performed.

According to the third aspect of the present disclosure, processing load can be equalized among printers.

According to the fourth aspect of the present disclosure, compared to a case where grouping of a plurality of print jobs is performed without taking into account occurrence of an interruption time, the load of a printer with a low printing performance can be reduced.

According to the fifth aspect of the present disclosure, compared to a case where grouping of a plurality of print jobs is performed without taking into account occurrence of an interruption time, the accuracy of the entire printing schedule can be improved and the load can be distributed among printers.

According to the sixth aspect of the present disclosure, grouping can be performed based on a unified printing condition.

According to the seventh aspect of the present disclosure, compared to a case where grouping of a plurality of print jobs is performed without taking into account occurrence of an interruption time, the interruption time generated at the time of switching between jobs can be shortened and a discrepancy between the printing schedule and the actual printing time can further be reduced.

### Brief Description of the Drawings

Exemplary embodiments of the present disclosure will be described in detail based on the following figures, wherein:
Fig. 1 is a diagram illustrating an example of the schematic configuration of a system;
Fig. 2 is a block diagram illustrating a hardware configuration of a user terminal;
Fig. 3 is a flowchart illustrating a flow of an identifying process;
Fig. 4 illustrates an example of a screen displayed on a display unit of the user terminal;
Fig. 5 is a first flowchart illustrating a flow of a re-grouping process;
Fig. 6 illustrates an example of a priority level table;
Fig. 7 illustrates an example of grouping of print jobs for a case where all the printers are of type A with the same printing performance;
Fig. 8 illustrates an example of grouping of print jobs for a case where the plurality of printers are of type A and type B with different printing performances;
Fig. 9 is a second flowchart illustrating a flow of a re-grouping process; and
Fig. 10 illustrates an example of combinations of jobs in individual groups displayed on the display unit.

### Detailed Description

Hereinafter, a system 10 according to an exemplary embodiment will be described.

### (First exemplary embodiment)

First, the system 10 according to a first exemplary embodiment will be described.

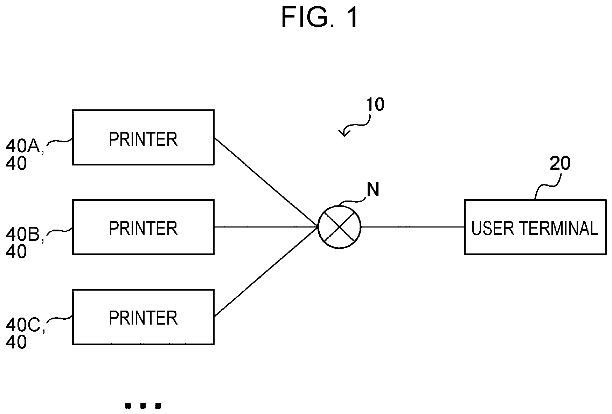

Fig. 1 is a diagram illustrating an example of the schematic configuration of the system 10.

As illustrated in Fig. 1, the system 10 includes a user terminal 20 and a plurality of printers 40. The user terminal 20 and the plurality of printers 40 are connected in such a manner that they are able to communicate with one another via a network N. Although three printers 40A, 40B, and 40C are illustrated as the printers 40 in Fig. 1, the number of printers 40 included in the system 10 is not particularly limited. Hereinafter, the printers 40A, 40B, and 40C will be collectively referred to as printers 40 unless a particular printer is specified.

The user terminal 20 is a terminal that an administrator who manages the overall flow of print jobs operates. The user terminal 20 includes, for example, a function for providing a printing instruction to a printer 40.

Each of the printers 40 is an apparatus that is installed in a printing factory and performs printing based on a printing instruction from the user terminal 20. The printers 40 have a basic configuration similar to typical printers. Therefore, description of the detailed configuration of the printers 40 will be omitted.

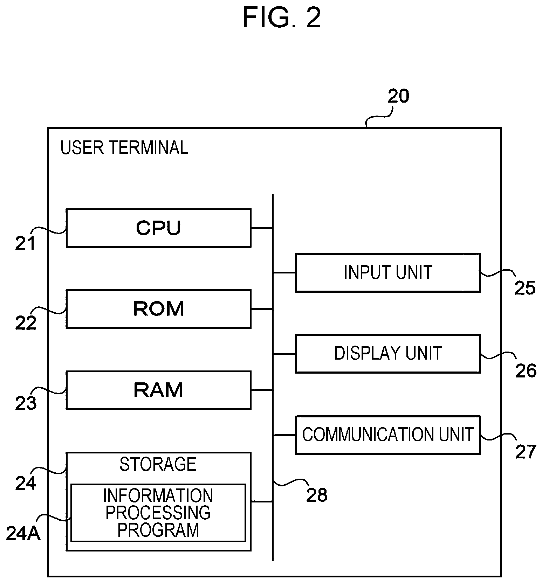

Fig. 2 is a block diagram illustrating a hardware configuration of the user terminal 20.

As illustrated in Fig. 2, the user terminal 20 includes a central processing unit (CPU) 21, a read only memory (ROM) 22, a random access memory (RAM) 23, a storage 24, an input unit 25, a display unit 26, and a communication unit 27. These components are connected in such a manner that they are able to communicate with one another via a bus 28.

The CPU 21 is a central processing unit. The CPU 21 executes various programs and controls various units. That is, the CPU 21 reads a program from the ROM 22 or the storage 24 and executes the program by using the RAM 23 as a work area. The CPU 21 performs control of the components mentioned above and various arithmetic processes in accordance with the program stored in the ROM 22 or the storage 24. The CPU 21 is an example of a "processor" in the present disclosure.

Various programs and various data are stored in the ROM 22. A program or data is temporarily stored in the RAM 23 as a work area.

The storage 24 includes a storage device such as a hard disk drive (HDD), a solid state drive (SSD), or a flash memory. Various programs and various data are stored in the storage 24. An information processing program 24A, which will be described later, for causing the CPU 21 to execute various processes is stored in the storage 24. The information processing program 24A is an example of an "information processing program" in the present disclosure.

The input unit 25 includes, for example, a keyboard, a mouse, various buttons, a microphone, a camera, and the like and is used to perform various inputs.

The display unit 26 is, for example, a liquid crystal display and displays various types of information. The display unit 26 may be of a touch panel type and may also function as the input unit 25.

The communication unit 27 is an interface to communicate with other apparatuses. For example, standards for wired communication such as Ethernet (registered trademark) or fiber distributed data interface (FDDI) or standards for wireless communication such as 4G, 5G, or Wi-Fi (registered trademark) may be used for communication performed by the communication unit 27.

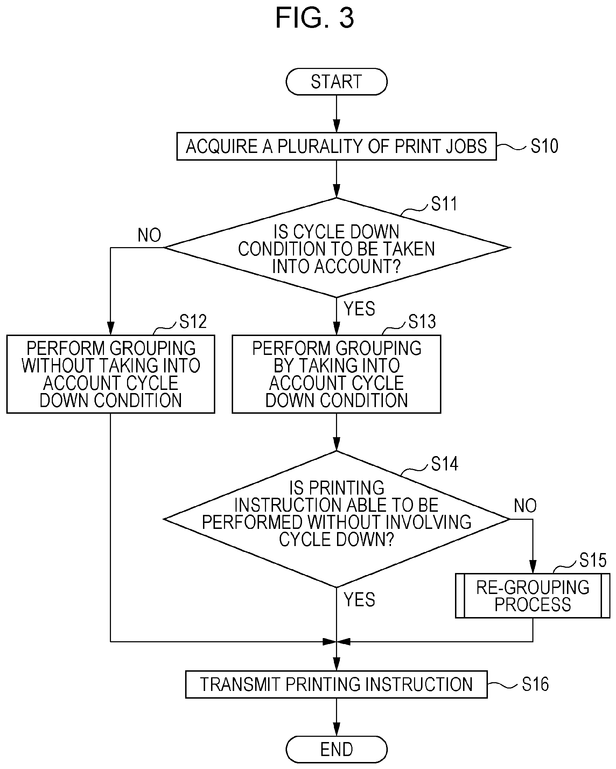

Fig. 3 is a flowchart illustrating a flow of an identifying process performed by the user terminal 20. The identifying process is performed by the CPU 21 reading the information processing program 24A from the storage 24, loading the information processing program 24A onto the RAM 23, and executing the information processing program 24A. For example, the identifying process is repeatedly and automatically performed at predetermined time intervals.

In step S10, the CPU 21 acquires a plurality of print jobs including a combination of jobs in which an interruption time (hereinafter, referred to as "cycle down") during which printing is interrupted occurs due to a change in printing conditions. The plurality of print jobs are received jobs for which a printing schedule is to be designed. The plurality of print jobs are acquired based on, for example, data saved in the storage 24. Then, the CPU 21 proceeds to step S11.

In step S11, the CPU 21 determines whether or not a cycle down condition, which is a printing condition that causes cycle down to occur, is to be taken into account.

Cycle down conditions include, for example, paper type, setting of single-sided/double-sided, and color mode. Regarding paper type, since plain paper and thick paper have different fixing temperatures, in the case where switching between different types of paper is performed, temperature adjustment for a fixing unit is necessary, which causes cycle down. In the case where switching from single-sided printing to double-sided printing or switching from double-sided printing to single-sided printing is performed, since a paper transport path changes, processing for switching a transport path inside the printer 40 is necessary, which causes cycle down. Furthermore, in the case where switching from black and white printing to color printing or switching from color printing to black and white printing is performed, switching of a developing unit is necessary, which causes cycle down.

In the case where it is determined that a cycle down condition is to be taken into account (step S11: Yes), the CPU 21 proceeds to step S13. In contrast, in the case where it is determined that a cycle down condition is not to be taken into account (step S11: No), the CPU 21 proceeds to step S12.

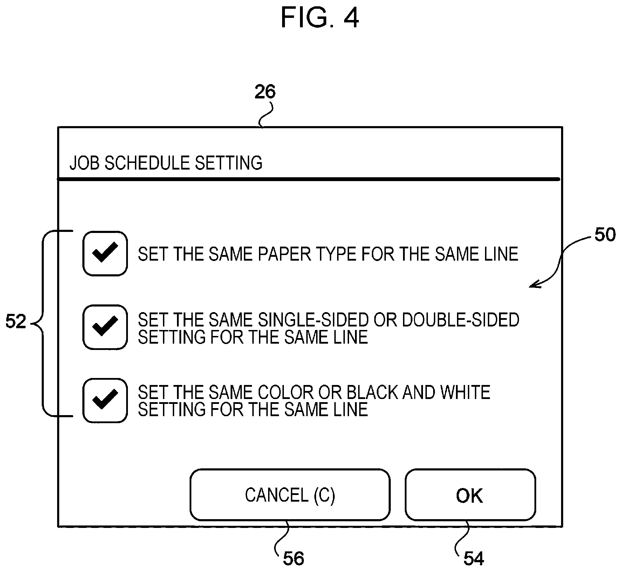

Fig. 4 illustrates an example of a screen displayed on the display unit 26 of the user terminal 20. On the screen illustrated in Fig. 4, a user is able to select whether or not to take into account a cycle down condition when performing grouping of the plurality of print jobs acquired in step S10.

In Fig. 4, options 50, check boxes 52, an OK button 54, and a cancel button 56 are illustrated.

The options 50 are items indicating cycle down conditions and indicate, for example, whether or not to set the same printing conditions, such as paper type, setting of single-sided/double-sided, and color mode, for the same production line. Check boxes 52 are provided for corresponding options 50, so that the user is able to select a desired cycle down condition. In Fig. 4, all the check boxes 52 are ticked, which means all the cycle down conditions are to be taken into account.

Furthermore, by operating the OK button 54, the user is able to confirm the selected cycle down conditions and allow the settings to be reflected in grouping of print jobs. In contrast, in the case where the cancel button 56 is operated, the screen is transitioned to a predetermined screen, and selected contents are not reflected.

Referring back to Fig. 3, in step S12, the CPU 21 performs grouping of the plurality of print jobs acquired in step S10 without taking into account a cycle down condition. The grouping is performed using a well-known method in an appropriate manner. For example, a method for grouping a plurality of print jobs, based on the order in which jobs were received or the number of pages, may be used. Then, the CPU 21 proceeds to step S16.

In step S13, the CPU 21 performs grouping of the plurality of print jobs acquired in step S10 by taking into account a cycle down condition set by the user. Here, the CPU 21 performs, for each cycle down condition or for each combination of a plurality of cycle down conditions, grouping of the plurality of print jobs. For example, in the case where only a cycle down condition based on paper type is taken into account for the plurality of print jobs, jobs for plain paper are formed into a group and jobs for thick paper are formed into another group. Furthermore, in the case where paper type and color mode are taken into account, jobs for the same paper type and the same color mode are formed into a group and jobs for different combinations are formed into different groups. Then, the CPU 21 proceeds to step S14.

In step S14, the CPU 21 determines whether or not a printing instruction not involving cycle down is able to be performed. In the case where it is determined that such a printing instruction is able to be performed (step S14: Yes), the CPU 21 proceeds to step S16. In contrast, in the case where it is determined that such a printing instruction is not able to be performed (step S14: No), the CPU 21 proceeds to step S15. This determination is based on the result of grouping in step S13 and is made by determining whether or not a combination of print jobs allocated to a single printer 40 includes a cause for occurrence of cycle down.

Specifically, in the case where the number of allocated jobs and the number of printers 40 are the same and the individual printers 40 process only jobs under the same printing conditions, a printing instruction is able to be performed without cycle down. Furthermore, in the case where the number of printers 40 is sufficient and jobs under different cycle down conditions are able to be allocated to different printers 40, a printing instruction is able to be performed without cycle down.

In contrast, in the case where a job including a cycle down condition needs to be allocated to a printer 40, a printing instruction is not able to be performed without cycle down. Furthermore, in the case where the number of printers 40 is not sufficient and jobs including cycle down conditions need to be integrated, a printing instruction is not able to be performed without cycle down.

In step S15, the CPU 21 performs, based on the result of grouping in step S13, a re-grouping process in such a manner that occurrence of cycle down is minimized. The details of the re-grouping process will be described later. Then, the CPU 21 proceeds to step S16.

In step S16, the CPU 21 transmits printing instructions to the printers 40. The printing instructions include information about print jobs to be executed by the printers 40. Then, the CPU 21 ends the identifying process.

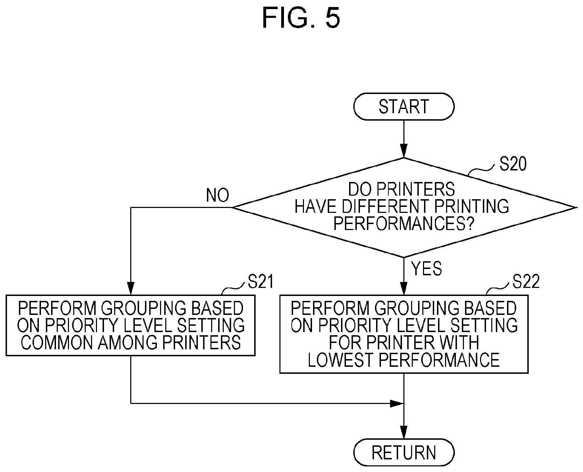

Fig. 5 is a first flowchart illustrating a flow of a re-grouping process performed by the user terminal 20. The re-grouping process is performed by the CPU 21 reading the information processing program 24A from the storage 24, loading the information processing program 24A onto the RAM 23, and executing the information processing program 24A.

In step S20, the CPU 21 determines whether or not the plurality of printers 40 to which printing instructions are to be transmitted have different printing performances. To perform this determination, the CPU 21 acquires in advance installation information and performance information from the printers 40 and stores the acquired information into the storage 24.

The installation information is information for identifying a printing factory in which each of the printers 40 is installed. The performance information includes information indicating the printing performance of each of the printers 40 and a priority level table. The performance information reflects characteristics of the printer 40. The printing performance includes a cycle down time required for each cycle down condition and processing capacity (for example, pages per minute: ppm). Furthermore, the priority level table represents a priority level setting that is set, based on a printing performance of each of the printers 40, in such a manner that a higher degree of priority for grouping of print jobs is set for a longer cycle down time based on a printing condition.

In the case where it is determined, based on the acquired installation information and performance information, that the plurality of printers 40 have different printing performances (step S20: Yes), the CPU 21 proceeds to step S22. In contrast, in the case where it is determined that the plurality of printers 40 have similar printing performances (step S20: No), the CPU 21 proceeds to step S21. For example, in the case where the difference in processing performance between the printers 40 is equal to or more than a predetermined threshold value or in the case where the difference in cycle down time is equal to or more than a predetermined threshold value, the CPU 21 determines that the printers 40 have different printing performances. In contrast, in the case where such an index is less than the predetermined threshold value, the CPU 21 determines that the printers 40 have similar printing performances.

In step S21, the CPU 21 performs, based on the priority level setting that is common among the plurality of printers 40 that have similar printing performances, re-grouping of the result obtained by the grouping in step S13. A specific example of the grouping will be described later. Then, the CPU 21 returns to the process illustrated in Fig. 3 and proceeds to step S16.

In step S22, the CPU 21 performs, based on the priority level setting for the printer 40 with the lowest performance among the plurality of printers 40 that have different printing performances, re-grouping of the result obtained by the grouping in step S13. A specific example of the grouping will be described later. Then, the CPU 21 returns to the process illustrated in Fig. 3 and proceeds to step S16.

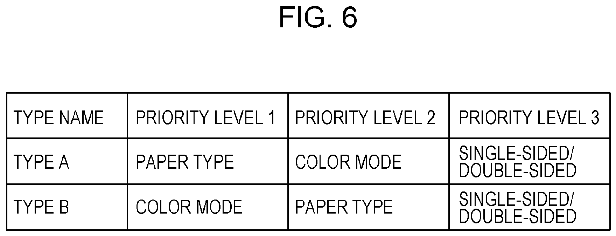

Fig. 6 illustrates an example of a priority level table.

In the priority level table, based on the printing performance of each of the printers 40, a higher priority level is set for a longer cycle down time based on a printing condition. For example, in the priority level table illustrated in Fig. 6, priority level 1 indicates the highest degree of priority, and the degree of priority decreases in the order of priority level 2 and priority level 3. Specifically, in the case where a printer 40 is of type A, the degree of priority regarding a change in paper type is the highest. Then, the degree of priority decreases in the order of a change in color mode and a change in setting of single-sided/double-sided.

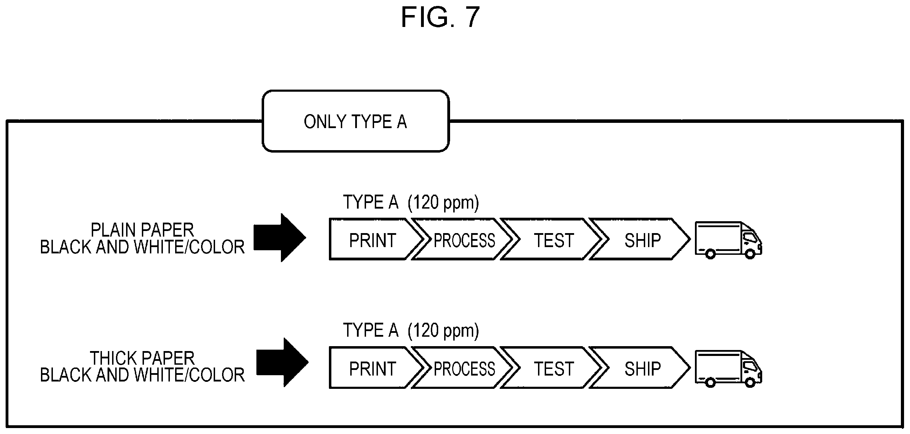

Fig. 7 illustrates an example of grouping of print jobs for the case where all the printers 40 are of type A with the same printing performance.

In the example illustrated in Fig. 7, a plurality of print jobs are executed using two printers: a printer 40A and a printer 40B, of type A with the same printing performance. The printing level table for the printer 40A and the printer 40B corresponds to type A in Fig. 6, and the common priority level setting is used for the printer 40A and the printer 40B.

In this example, the plurality of print jobs include four combinations of jobs, for example, "plain paper and black and white printing," "plain paper and color printing," "thick paper and black and white printing," and "thick paper and color printing," and there are a plurality of cycle down conditions.

In the case where all the printers 40 are of type A, grouping of print jobs is performed based on the priority level table for type A. Specifically, in Fig. 7, regarding print jobs for both the printer 40A, which is illustrated in an upper part, and the printer 40B, which is illustrated in a lower part, print jobs that do not require a change in paper type are allocated to the printers 40A and 40B, based on priority level 1, which is the highest priority in the priority level table. Thus, occurrence of cycle down is suppressed, and the total cycle down time is shortened.

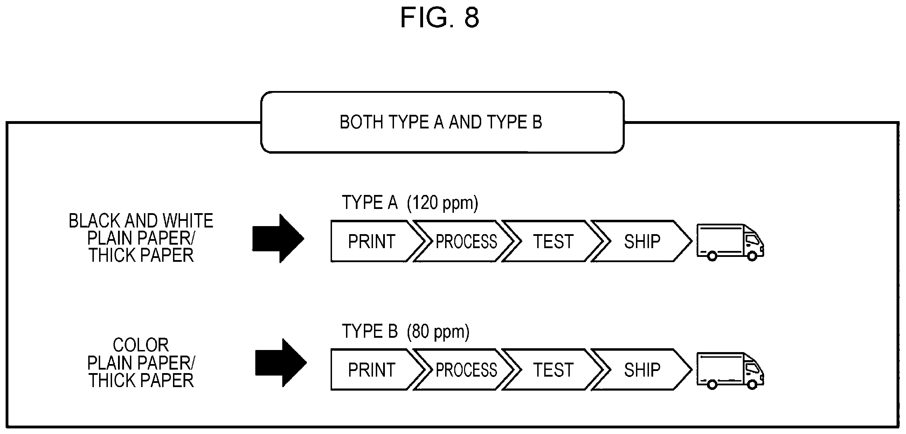

Fig. 8 illustrates an example of grouping of print jobs for the case where the plurality of printers 40 are of type A and type B with different printing performances.

In the example illustrated in Fig. 8, a plurality of print jobs are executed using the printer 40A of type A with the processing capacity of 120 ppm and a printer 40C of type B with the processing capacity of 80 ppm. The priority level table for the printer 40A corresponds to type A illustrated in Fig. 6, and the priority level table for the printer 40C corresponds to type B illustrated in Fig. 6. Thus, different priority level settings are used for the printer 40A and the printer 40C.

In this example, the plurality of print jobs include four combinations of jobs, for example, "plain paper and black and white printing," "plain paper and color printing," "thick paper and black and white printing," and "thick paper and color printing," and there are a plurality of cycle down conditions.

In the case where there are the printers 40 with different printing performances as described above, the priority level setting for type B with a lower printing performance is taken into account, and a print job that does not require a change in color mode is allocated to the printer 40C, based on priority level 1, which is the highest priority in the priority level table for type B.

In this case, this conflicts with a change condition regarding paper type, which is at the priority level 1 and is the highest priority in the priority level table for type A. However, since the priority level setting for type B is prioritized, a print job that requires a change in paper type is allocated to the printer 40A.

Accordingly, the printing time at the printer 40C of type B with the lower printing performance is less likely to become a bottleneck. In contrast, since the print job that requires a change in paper type is allocated to the printer 40A, there is a possibility that the cycle down time will increase. However, since the bottleneck at the printer 40C is resolved, the total throughput of all the printers 40 improves, which results in suppressing an increase in the total printing time of all the printers 40.

After distributing print jobs based on the priority level setting for the printer 40C, the priority level setting for the printer 40A is taken into account when distributing the remaining print jobs. As a result, occurrence of cycle down at the printer 40A may be suppressed, which results in suppressing an increase in the total printing time at all the printers 40.

As described above, in the user terminal 20, the CPU 21 acquires a plurality of print jobs including a combination of jobs in which cycle down occurs. The CPU 21 performs, for each cycle down condition or for each combination of a plurality of cycle down conditions, grouping of the acquired plurality of print jobs. Then, the CPU 21 outputs a combination of jobs in each group so that the printers 40 perform the print jobs. Specifically, the CPU 21 transmits to each printer 40 a printing instruction including information on a print job to be executed by the printer 40. Thus, compared to the case where grouping of a plurality of print jobs is performed without taken into account occurrence of cycle down, the user terminal 20 is able to reduce the discrepancy between the printing schedule and the actual printing time.

Furthermore, in the user terminal 20, the CPU 21 acquires a priority level setting corresponding to a printing performance of each of the printers 40 from a priority level table. Then, the CPU 21 performs, based on the priority level setting for each of the printers 40, grouping of the acquired plurality of print jobs. Thus, the user terminal 20 is able to perform grouping based on characteristics of the printers 40.

Furthermore, in the user terminal 20, in the case where printing is performed using the plurality of printers 40 with similar printing performances, the CPU 21 distributes, based on a priority level setting that is common among the plurality of printers 40, print jobs including a cycle down condition to the plurality of printers 40. Thus, the user terminal 20 is able to equalize the processing load among the printers 40.

Furthermore, in the user terminal 20, in the case where printing is performed using the plurality of printers 40 with different printing performances, the CPU 21 distributes, based on a priority level setting for the printer 40 with a low printing performance, print jobs including a cycle down condition for the printer 40 with the low printing performance to the printer 40 with the low printing performance and a different printer 40. Thus, compared to the case where grouping of a plurality of print jobs is performed without taking into account occurrence of cycle down, the user terminal 20 is able to reduce the load of the printer 40 with the low printing performance.

Furthermore, in the user terminal 20, the CPU 21 distributes print jobs including a cycle down condition for a printer 40 with a low printing performance to the printer 40 with the low printing performance and a different printer 40 and then distributes, based on a priority level setting for the different printer 40, the remaining print jobs to the printer 40 with the low printing performance and the different printer 40. Thus, compared to the case where grouping of a plurality of print jobs is performed without taking into account occurrence of cycle down, the user terminal 20 achieves an improvement in the accuracy of the entire printing schedule and a distribution of the load among the printers 40.

### (Second exemplary embodiment)

Next, the system 10 according to a second exemplary embodiment will be described. Parts that overlap with those in the exemplary embodiment described above will be omitted or simplified.

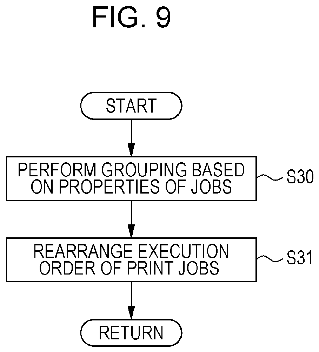

Fig. 9 is a second flowchart illustrating a flow of a re-grouping process performed by the user terminal 20.

In step S30, the CPU 21 performs, based on predetermined properties of jobs, re-grouping of the result obtained by the grouping in step S13. For example, as properties of a job, paper type, color mode, setting of single-sided/double-sided, the number of pages, fixing temperature, printing priority level, and the like are set. Then, the CPU 21 proceeds to step S31.

In step S31, the CPU 21 rearranges the execution order of the print jobs grouped in step S30 in ascending order of the length of the cycle down time. The execution order of the print jobs represents the order of priorities in which the print jobs are processed in the printers 40 and is set so that the cycle down time generated at the time of switching between jobs is minimized. For example, by rearranging the print jobs in ascending order of the amount of change in fixing temperature, which causes a cycle down time, the time required for temperature adjustment of the printers 40 is minimized. Then, the CPU 21 returns to the process illustrated in Fig. 3 and proceeds to step S16.

As described above, in the user terminal 20, the CPU 21 performs, based on a predetermined property of a job, grouping of the acquired plurality of print jobs. Thus, the user terminal 20 is able to perform grouping, based on a unified printing condition.

Furthermore, in the user terminal 20, the CPU 21 rearranges the execution order of the grouped print jobs in ascending order of the length of the cycle down time. Thus, compared to the case where grouping of a plurality of print jobs is performed without taking into account occurrence of cycle down, the user terminal 20 is able to shorten the cycle down time generated at the time of switching between jobs and further reduce a discrepancy between the printing schedule and the actual printing time.

### (Others)

In the exemplary embodiments described above, the CPU 21 may output a combination of jobs in each group to the display unit 26.

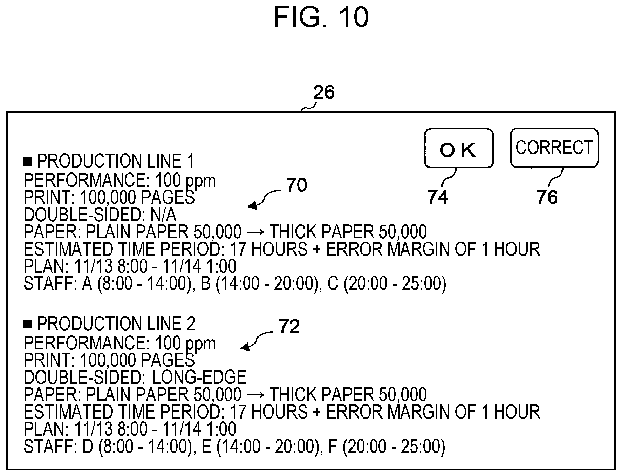

Fig. 10 illustrates an example of combinations of jobs in individual groups displayed on the display unit 26. In Fig. 10, job information 70, job information 72, an OK button 74, and a correct button 76 are displayed.

The job information 70 indicates a combination of jobs to be executed by a printer 40 in production line 1. For example, the job information 70 indicates that the job to be executed by the printer 40 is single-sided printing and requires a change from plain paper to thick paper.

The job information 72 indicates a combination of jobs to be executed by a printer 40 in production line 2. For example, the job information 72 indicates that the job to be executed by the printer 40 is double-sided printing and requires a change from plain paper to thick paper.

By operating the OK button 74, the user is able to confirm contents of the job information 70 and the job information 72 and transmit printing instructions to the printers 40. Furthermore, by operating the correct button 76, the user is able to correct the contents of the job information 70 and the job information 72.

In the exemplary embodiments described above, the CPU 21 may evaluate the real-time operating state of the printers 40 and dynamically adjust the execution order of jobs. Specifically, the CPU 21 analyzes operation logs of the printers 40 and evaluates the cycle down time for each job. Based on the evaluation, the order of jobs is determined in such a manner that the cycle down time is shortened. For example, in the case where the next job requires fixing at high temperature, by switching the immediately previous job to a job that is able to be executed at high temperature setting, occurrence of cycle down caused by a temperature change is avoided.

In the exemplary embodiments described above, a self-diagnosis function of the printers 40 may be utilized to optimize scheduling of print jobs. Specifically, each of the printers 40 diagnoses, based on sensor data, the abrasion state of a part and transmits a diagnosis result to the CPU 21. The CPU 21 appropriately adjusts allocation of print jobs, based on the acquired diagnosis result. For example, in the case where abrasion of a fixing roller of a printer 40 has progressed, by allocating a job that requires a large amount of change in temperature to another printer 40, load is distributed and the risk of breakdown is reduced.

In the exemplary embodiments described above, the CPU 21 may optimize power consumption by the printers 40 and allocate jobs in such a manner that power load is not concentrated. Specifically, the CPU 21 acquires power consumption data of the printers 40 and adjusts schedule of jobs in such a manner that power load at the peak time is reduced. For example, in the case where there are a plurality of jobs that require fixing at high temperature, by spreading out the plurality of jobs in different time periods, occurrence of a temporary high load state is prevented. Furthermore, by taking into account power consumption characteristics of each printer 40 and preferentially allocating a job that requires high power consumption to a printer 40 with less power load, the total power consumption balance is able to be optimized.

In the exemplary embodiments described above, the CPU 21 may insert a virtual job so that the cycle down time of a printer 40 is shortened. Specifically, the CPU 21 evaluates a printing condition of the next job. If cycle down is highly likely to occur, a virtual job is inserted. For example, in the case where a change in color mode is required, a toner supply job or an ink purge job is executed in advance, so that switching time is shortened. Furthermore, in the case where a sudden change in fixing temperature is predicted, a short-time low-energy job for the purpose of temperature adjustment is virtually inserted, so that fixing processing for the next job is stabilized and the impact of cycle down is minimized.

The "system" in an exemplary embodiment includes a system including a plurality of apparatuses and a system including a single apparatus. For example, a single user terminal 20 may be an example of an "information processing system" according to an aspect of the present disclosure or a plurality of user terminals 20 may be an example of an "information processing system" according to an aspect of the present disclosure.

In the exemplary embodiments, the processes are performed by any computer. The computer may perform the processes by using a processor serving as hardware, a program serving as software, or combination of these. In this case, the processor is configured to perform the processes in the exemplary embodiments in cooperation with the program and may function as a unit or a means in the exemplary embodiments. The order in which the processor performs the processes is not limited to the described order and may be changed appropriately. The computer may be a general-purpose computer, an application specific computer, a workstation, or another system capable of performing the processes.

The processor may be composed of one or more pieces of hardware, and the type of the hardware is not limited. For example, the processor may be composed of hardware such as a central processing unit (CPU), a micro processing unit (MPU), a programmable logic device such as a field programmable gate array (FPGA), a dedicated circuit for performing specific processing such as an application specific integrated circuit (ASIC), a graphics processing unit (GPU), or a neural processing unit (NPU). Regarding the type of the hardware, different types of hardware may be combined. If multiple pieces of hardware are configured to perform one or more processes of the processor, the multiple pieces of hardware may be present in apparatuses physically away from each other or may be present in one apparatus. In each of exemplary embodiments, the order in which the processor performs the processes is not limited to the order described above and may be changed appropriately. The hardware is composed of electric circuitry in which circuit elements such as semiconductor devices are combined, or the like.

Further, the program may be software such as firmware or microcode. The program may be, for example, a program module group, and the functions thereof may be implemented by processors configured to implement the respective functions. The program may be program code or multiple code segments stored in one or more non-transitory computer readable media (for example, a storage medium or another storage). The program may be stored in such a divided manner in multiple non-transitory computer readable media present in apparatuses physically away from each other. The program code or the code segments may represent a procedure, a function, a sub program, a routine, a subroutine, a module, a software package, a class or any combination of instructions, data structures, or program statements. The program code or the code segment may be connected to another code segment or a hardware circuit by transmitting and/or receiving information, data, an argument, a parameter, or memory content. Furthermore, a program according to an exemplary embodiment of the present application may be provided as a program product.

The foregoing description of the exemplary embodiments of the present disclosure has been provided for the purposes of illustration and description. It is not intended to be exhaustive or to limit the disclosure to the precise forms disclosed. Obviously, many modifications and variations will be apparent to practitioners skilled in the art. The embodiments were chosen and described in order to best explain the principles of the disclosure and its practical applications, thereby enabling others skilled in the art to understand the disclosure for various embodiments and with the various modifications as are suited to the particular use contemplated. It is intended that the scope of the disclosure be defined by the following claims and their equivalents.

### Appendix

(((1))) An information processing system comprising:
   a processor configured to:
      acquire a plurality of print jobs including a combination of jobs in which an interruption time during which printing is interrupted occurs due to a change in a printing condition;
   perform, for each printing condition that causes the interruption time to occur or for each combination of a plurality of printing conditions that cause the interruption time to occur, grouping of the acquired plurality of print jobs; and
   output a combination of jobs in each group so that the print jobs are executed by printers.
(((2))) The information processing system according to (((1))), wherein the processor is configured to:
   acquire a priority level setting that is set, based on a printing performance of each of the printers, in such a manner that a higher degree of priority is set for a longer interruption time based on a printing condition; and
   perform, based on the priority level settings for the individual printers, grouping of the acquired plurality of print jobs.
(((3))) The information processing system according to (((2))), wherein the processor is configured to, in a case where printing is performed using a plurality of printers with similar printing performances, distribute, based on a priority level setting that is common among the plurality of printers, print jobs including a printing condition that causes the interruption time to occur to the plurality of printers.
(((4))) The information processing system according to (((2))) or (((3))), wherein the processor is configured to, in a case where printing is performed using a plurality of printers with different printing performances, distribute, based on a priority level setting for a printer with a low printing performance, print jobs including a printing condition that causes the interruption time to occur in the printer with the low printing performance to the printer with the low printing performance and a different printer.
(((5))) The information processing system according to (((4))), wherein the processor is configured to distribute the print jobs including the printing condition for the printer with the low printing performance to the printer with the low printing performance and the different printer and then distribute, based on a priority level setting for the different printer, remaining print jobs to the printer with the low printing performance and the different printer.
(((6))) The information processing system according to any one of (((1))) to (((5))), wherein the processor is configured to perform, based on a predetermined property of a job, grouping of the acquired plurality of print jobs.
(((7))) The information processing system according to (((6))), wherein the processor is configured to rearrange an execution order of the grouped print jobs in ascending order of a length of the interruption time.
(((8))) A program causing a computer to execute a process for information processing, the process comprising:
   acquiring a plurality of print jobs including a combination of jobs in which an interruption time during which printing is interrupted occurs due to a change in a printing condition;
   performing, for each printing condition that causes the interruption time to occur or for each combination of a plurality of printing conditions that cause the interruption time to occur, grouping of the acquired plurality of print jobs; and
   outputting a combination of jobs in each group so that the print jobs are executed by printers.

According to (((1))) and (((8))), compared to a case where grouping of a plurality of print jobs is performed without taking into account occurrence an interruption time, a discrepancy between a printing schedule and an actual printing time can be reduced.

According to (((2))), grouping based on characteristics of printers can be performed.

According to (((3))), processing load can be equalized among printers.

According to (((4))), compared to a case where grouping of a plurality of print jobs is performed without taking into account occurrence of an interruption time, the load of a printer with a low printing performance can be reduced.

According to (((5))), compared to a case where grouping of a plurality of print jobs is performed without taking into account occurrence of an interruption time, the accuracy of the entire printing schedule can be improved and the load can be distributed among printers.

According to (((6))), grouping can be performed based on a unified printing condition.

According to (((7))), compared to a case where grouping of a plurality of print jobs is performed without taking into account occurrence of an interruption time, the interruption time generated at the time of switching between jobs can be shortened and a discrepancy between the printing schedule and the actual printing time can further be reduced.

## Claims

1. An information processing system comprising:
a processor configured to:
acquire a plurality of print jobs including a combination of jobs in which an interruption time during which printing is interrupted occurs due to a change in a printing condition;
perform, for each printing condition that causes the interruption time to occur or for each combination of a plurality of printing conditions that cause the interruption time to occur, grouping of the acquired plurality of print jobs; and
output a combination of jobs in each group so that the print jobs are executed by printers.

2. The information processing system according to claim 1, wherein the processor is configured to:
acquire a priority level setting that is set, based on a printing performance of each of the printers, in such a manner that a higher degree of priority is set for a longer interruption time based on a printing condition; and
perform, based on the priority level settings for the individual printers, grouping of the acquired plurality of print jobs.

3. The information processing system according to claim 2, wherein the processor is configured to, in a case where printing is performed using a plurality of printers with similar printing performances, distribute, based on a priority level setting that is common among the plurality of printers, print jobs including a printing condition that causes the interruption time to occur to the plurality of printers.

4. The information processing system according to claim 2 or 3, wherein the processor is configured to, in a case where printing is performed using a plurality of printers with different printing performances, distribute, based on a priority level setting for a printer with a low printing performance, print jobs including a printing condition that causes the interruption time to occur in the printer with the low printing performance to the printer with the low printing performance and a different printer.

5. The information processing system according to claim 4, wherein the processor is configured to distribute the print jobs including the printing condition for the printer with the low printing performance to the printer with the low printing performance and the different printer and then distribute, based on a priority level setting for the different printer, remaining print jobs to the printer with the low printing performance and the different printer.

6. The information processing system according to any one of claims 1 to 5, wherein the processor is configured to perform, based on a predetermined property of a job, grouping of the acquired plurality of print jobs.

7. The information processing system according to claim 6, wherein the processor is configured to rearrange an execution order of the grouped print jobs in ascending order of a length of the interruption time.

8. An information processing method, comprising:
acquiring a plurality of print jobs including a combination of jobs in which an interruption time during which printing is interrupted occurs due to a change in a printing condition;
performing, for each printing condition that causes the interruption time to occur or for each combination of a plurality of printing conditions that cause the interruption time to occur, grouping of the acquired plurality of print jobs; and
outputting a combination of jobs in each group so that the print jobs are executed by printers.

9. A program causing a computer to execute a process for information processing, the process comprising:
acquiring a plurality of print jobs including a combination of jobs in which an interruption time during which printing is interrupted occurs due to a change in a printing condition;
performing, for each printing condition that causes the interruption time to occur or for each combination of a plurality of printing conditions that cause the interruption time to occur, grouping of the acquired plurality of print jobs; and
outputting a combination of jobs in each group so that the print jobs are executed by printers.
